# EUROPEAN PATENT APPLICATION

(11) **EP 1 160 687 A2**
(43) Date of publication of application: **05.12.2001**
(21) Application number: 01112306.4
(22) Date of filing: 19.05.2001
(51) Int. Cl.: G06F 17/30

(54) **Digital information input system**

(30) Priority: 26.05.2000 JP 2000157057
(71) Applicant: Mine, Takashi, Higashikurume-shi, Tokyo (JP)
(72) Inventor: Mine, Takashi, Higashikurume-shi, Tokyo (JP)
(74) Representative: Patentanwälte Westphal, Mussgnug & Partner

(57) **Abstract**

A digital information input system includes an electronic information terminal device for inputting a code information regarding a search targeted article or the like and for sending data including the code information and a server for returning, to the digital information terminal device, a digital information corresponding to the code information included in the data from the electronic information terminal device. The electronic information terminal device sends data including the code information regarding the search targeted article or the like and allows use of the digital information sent from the server after the code information regarding the search targeted article and the like is inputted, for enabling easy access to digital information from the electronic information terminal device

## Description

### BACKGROUND OF THE INVENTION

### 1. Field of the Invention

This invention relates to a digital information input system for obtaining various digital information by using a portable information terminal device such as a cellular phone to make an inputting procedure easier for obtaining the digital information.

### 2. Description of Related Art

Today's development in digital technology has provided exceeding benefits to society and one of those benefits comes in a form of objects on the Internet, which serves as an information source. As a method for indicating a location of the object on the Internet, URL (Uniform Resource Locator) is widely used in which a variety of information such as texts, still/animated graphics and sounds could be swiftly obtained by inputting the URL into an address inputting space on some WWW (World Wide Web) browser for browsing the Internet.

Advertising and publicizing information such as corporate information, product information and classified ads on home pages has become one of requisite strategies in this digital age for legal entities such as companies and offices. The corporate information displayed on a home page could be browsed by using an electronic information terminal device such as a personal computer, and the latest information could be sent out without requiring an intermediary person or persons in a case such as providing product information. Other than using a typical personal computer as a means for accessing to the information on the Internet, access by using a cellular phone is recently increasing.

Although information of various forms could be obtained instantly through the Internet, an inputting procedure of the URL could sometimes be laborious for the user. In such a case where the user wishes to obtain information regarding a certain manufacturer of an interested product, the user may not easily obtain the URL connecting to the manufacturer, and even if the user does obtain the URL from a printed matter or the URL is read out from radio broadcasting or television broadcasting, the user could not access to the necessary information unless the precise URL is entered. The possibility of input of an erroneous URL becomes low when the URL is short, but a deeply held file in a web site containing a vast amount of information cannot be accessed easily, because the files in the web site are constituted of many levels, which renders the URL long.

In respect of a portable electronic information terminal device such as a cellular phone, the number of keys available for use is limited since a body of the terminal device itself is already of a small size. Furthermore, in respect of a terminal device having no alphabetical key, e.g., a terminal device simply having only ten keys, the terminal device requires the keys to be pushed several times in order for the user to get a desired alphabetical letter causing this inputting work to be not easy. More particularly, because the body of such a portable electronic information terminal device itself is already of a small size, the buttons and keys of the terminal device would also be in a small size; consequently, the inputting procedure would become further difficult.

Considering the aforementioned technical problem, it is an object of this invention to provide a digital information inputting system for enabling easy access to digital information from a portable electronic information terminal device such as a cellular phone.

### SUMMARY OF THE INVENTION

One of this invention for solving the foregoing problem is a digital information input system including: an electronic information terminal device for inputting code information regarding a search targeted article or the like and for sending data including the code information; and a server for returning, to the digital information terminal device, digital information corresponding to the code information included in the data from the electronic information terminal device, wherein the electronic information terminal device sends data including the code information regarding the search targeted article or the like and enables use of the digital information sent from the server after the code information regarding the search targeted article and the like is inputted.

By using this invention, the electronic information terminal device reads and sends the code information to the server and then, in correspondence with the code information, the code information is converted into digital information and returned to the electronic information terminal device. Therefore, the user of the electronic information terminal device could obtain digital information without the requirement of a laborious inputting procedure of the URL.

According to an embodiment of this invention, the electronic information terminal device is structured as a portable information terminal device having an infrared reading portion for reading codes. This infrared reading portion is faced toward a code indicating portion to emit an infrared ray for reading the code, and subsequently, the read data is stored in the portable information terminal device.

Another present invention is a digital information input system including an electronic information terminal device capable of sending data including a search targeted phone number; and a server for returning, to the digital information terminal device, digital information corresponding to the search targeted phone number included in the data from the electronic information terminal device, wherein the electronic information terminal device sends data including the phone number regarding the search targeted article or the like and enables use of the digital information sent from the server.

Where a company relating to a URL having the company's own products, printed matter or the like, code information for reading purpose is applicable onto the products and the like. Meanwhile, in respect of business dealing mainly with intangible services, digital information could be read by use of a telephone number. That is, the user operates the electronic information terminal device and creates data including a phone number, and the server could return digital information in a form corresponding to the data. Accordingly, the user could obtain information on an electronic information web, e.g., the Internet by using the returned digital information without having to directly input a URL using dialing buttons or ten keys.

According to an embodiment of this invention, the electronic information terminal device is a portable information terminal device capable of dialing inputting. A cellular phone is one example of the portable information terminal device.

In this invention, as an example of using digital information with the electronic information terminal device, the electronic information terminal device could display and store the digital information returned from the server into files such as graphic file or text file; play and store the digital information with a sound file; or provide information on an electronic information web, e.g., the Internet by using a link of the digital information.

Another invention is a digital information input system applying digital information upon an article or the like by using a readable transparent ink, wherein the transparent ink is read by a transparent ink-readable reading device loaded or connected to an portable information terminal device for reading digital information in a form of the transparent ink so as to obtain information regarding the article or the like.

This invention would not require devices such as servers, and would enable easy access to the Internet. According to an embodiment of this invention, the transparent ink could be made of an ion ink or an infrared absorbing ink.

### BRIEF DESCRIPTION OF THE DRAWINGS

The above and other objects and features of the invention are apparent to those skilled in the art from the following preferred embodiments thereof when considered in conjunction with the accompanied drawings, in which:
FIG.1 is a schematic view describing an example of a digital information input system regarding this invention;
FIG2 is a perspective view showing a barcode reading state of a digital information input system regarding this invention;
FIG.3 is a flow chart of a system for searching information by code inputting in accordance with a first embodiment of a digital information input system regarding this invention;
FIG.4 is a flow chart of a system for searching information based on a telephone number in according with a second embodiment of a digital information input system regarding this invention; and
FIG.5 is a diagram showing a reading scanning state of an ion ink used in accordance with a third embodiment of a digital information input system regarding this invention.

### DESCRIPTION OF THE PREFERRED EMBODIMENTS

Preferred embodiments of this invention will hereinafter be described with reference to the drawings.

### [First Embodiment]

The digital information input system according to the first embodiment of this invention is a system for obtaining required information by using a cellular phone serving as an electronic information terminal device for reading mainly a barcode and sending the readout of the barcode to a server.

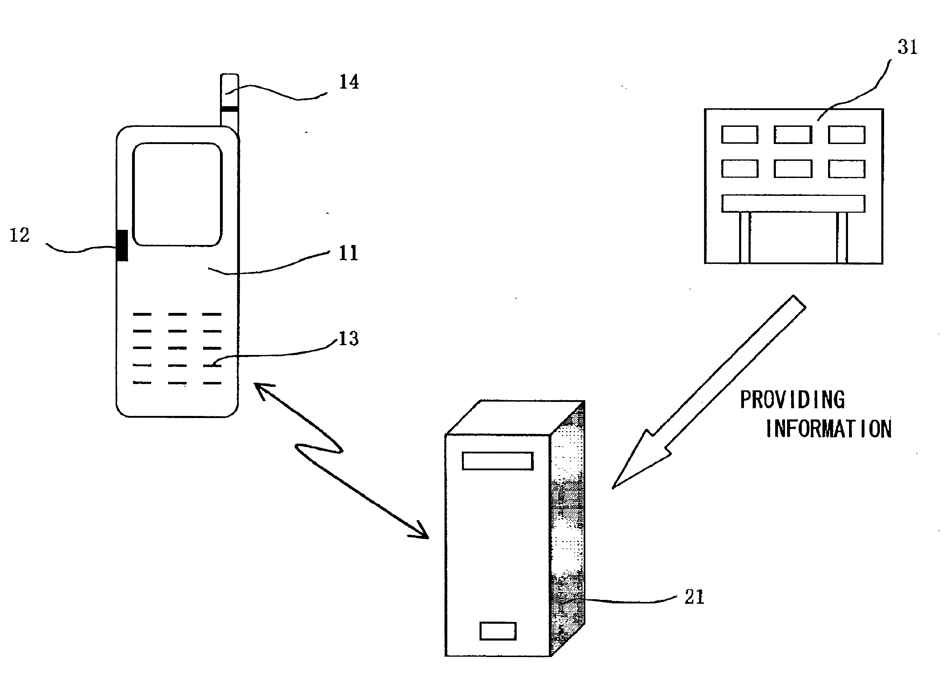

As shown in FIG.1, a digital information input system according to this embodiment has a cellular phone 11 serving as an electronic information terminal device used by a user, and a server 21 for providing digital information. The electronic information terminal device in this embodiment is the cellular phone 11 in which code information regarding a search targeted article or the like is inputted to the cellular phone 11 and then data including the code information are sent by the cellular phone 11; further, an infrared reading portion 12 is mounted at the cellular phone 11 for reading the code information. The cellular phone 11 has a communication function and has dialing key portion 13 for inputting telephone numbers and the like just as a typical cellular phone. In this specification, included in the term "search targeted article or the like" are: an article in which a user desires to retrieve information regarding the article itself; an article in which a user desires to retrieve information regarding such as a manufacturer, a distribution route or a distributor of an article; and an article in which a user desires to retrieve information regarding a provider of an article-related service offered to the user. In this specification, the term "article" is to be broadly interpreted including any tangible body capable of having code information applied upon, and also includes various forms such as wrappers or labels of a product and furthermore, flyers, pamphlets, catalogues, newspapers, magazines and books. As other examples of an electronic information terminal device, a notebook type personal computer, a PDA (Personal Digital Assistant, portable information terminal device) are included; and in a case where an aspect of portability is not omitted, a desktop type personal computer, and an Internet applicable television, an Internet applicable game machine, an Internet applicable electric household appliance, and also a car navigation device, etc. are included as the electronic information terminal device. Other than the infrared reading portion 12 mentioned in this embodiment, a device having a solid camera element such as a CCD camera, a MOS camera, or an image pickup tube, or a device having a microphone for inputting sound could be used as a device for reading the code information.

The server 21 is a device for returning digital information corresponding to the code information to the cellular phone 11 based on data from the cellular phone 11. Dialing a prescribed telephone number is one example for accessing the server 21. A variety of data sent from numerous companies, groups and individuals in a form of digital information is recorded to the server 21 wherein the digital information is comprised of various data such as text, still/animated graphics and sounds or combinations of the data. More specifically, in a case where a company desires to provide information of a product, the product data such as code data of the product (JAN code), information of the manufacturer or distributor such as name, address, telephone number, postal code of the manufacturer or distributor, telephone number for queries, latest information of presents and campaigns, E-mail address, URL of the company homepage, standard retail price, information regarding job offerings from the manufacturer or distributor and other various information regarding the product could be included. The various information is in a data form where text, still/animated graphics and sound are optionally combined in which an information provider 31, that is, a company or individual intending to provide the information, could independently set the various information. More particularly, the provided information from the information provider 31 could be renewed, deleted, corrected, supplemented and altered at all times on the convenience of the information provider 31; furthermore, the information could be instantly uploaded along with a file for renewal by accessing to the server 21.

Various codes such as a single dimensional code (bar code) or a two dimensional code could be used as an embodiment of the code information. For example, the server 21 is structured to provide information corresponding to a barcode, since barcodes are given to most products distributed in the market. JAN code for indicating uniformity of a product, NM-7 used for services such as package delivery, or IFT code, Code 128, PDF 417 (Symbol Inc. U.S.A), Code 39 are examples of the kinds of barcodes used for a single dimensional code, and QR Code model 2 (Nihon Denso), MaxiCode, VeriCode (Veritec Inc.), Carula Code (Alec Japan K.K.), DaTa Code (ID Matrix Inc.), Cybercode (Sony Corp.), Intacta Code are examples of the kind of barcodes used for a two dimensional code. The codes used for distribution serve to instantaneously differentiate each product or the like in which a different code is given to each different product. That is, information regarding the manufacturer or the like is included inside the code number in a form using assigned numbers, and subsequently, related data could be easily retrieved by coordinating of the code numbers with the information.

The server 21 of this embodiment is structured to correspond to all of or part of the code information for swiftly returning the corresponding digital data when receiving the data including the code information. In means to correspond to the respective codes, the server 21 could correspond automatically by analyzing and controlling the codes or the cellular phone 11 could correspond to the codes by differentiating the code information. The differentiation of the code information with the cellular phone 11 could be performed either automatically or manually. When differentiating manually, the manual differentiation could be simplified by adding a procedure such as pressing a first or last button in correspondence with the JAN code while arranging other buttons in correspondence with program codes and other codes.

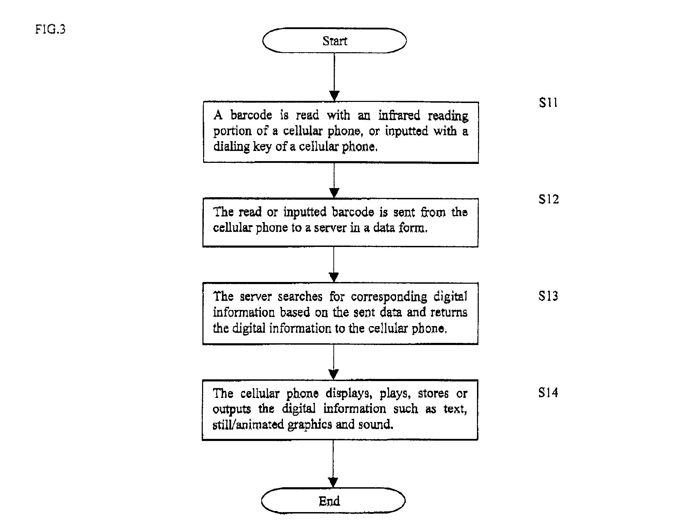

The digital information input system regarding this embodiment offers to provide digital information by operating in compliance with a flow chart shown in FIG.3 described afterwards. Before the digital information is available to the user, the server 21 is already stocked with a prescribed database comprising information provided from numerous information providers 31. The information of the server 21 could be renewed, supplemented, altered, and deleted whenever necessary. The digital information returned from the server 21 to the cellular phone 11 could be set freely by the information provider 31 in which the server 21 returns the digital information in accordance with the setting of the information provider 31. For example, in a case where an information provider 31 wishes to promote the sales of drinking water, the information provider 31 could effectively inform promotion information to the users by setting the return digital information so that the promotion information could be inserted as a top priority. In a case where another information provider 31 wishes to recruit personnel, the information provider 31 could set the server 21 so that the recruitment information could be returned along with other information regarding a product of the information provider 31 when the server 21 is accessed from a code information of the product of the information provider 31.

The code inputted into the cellular phone 11 could be information of various kinds and is not to be limited to information regarding a product. For example, information regarding a television program could be obtained by inputting a code number presented on a television program section of a newspaper.

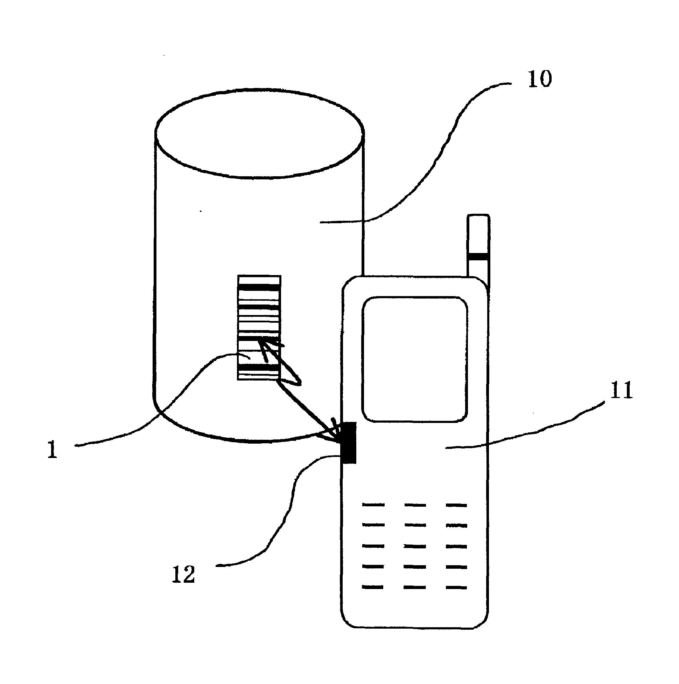

Operation of the digital information input system regarding this embodiment shown in FIG3 is started by inputting a bar code including information regarding a search targeted product by using the infrared reading portion 12 of the cellular phone 11 (step S11). The cellular phone 11 of this embodiment is a type of telephone loaded with the infrared reading portion 12 and is already being sold in the market; for example, the D-502i for the NTT Docomo cellular phones (made by Mitsubishi Denki K.K.) is a type loaded with an infrared reading portion. FIG.2 is a view showing an operation for obtaining bar code information of a canned product such as canned beer or canned juice by using the cellular phone 11. In a case where the user requires digital information regarding a canned juice 10, that is, when the search targeted article or the like is the canned juice 10, the infrared reading portion 12 of the cellular phone 11 is faced toward a barcode display portion 1 of the canned juice 10 and then the infrared reading portion 12 is activated by an operation of the buttons of the cellular phone 11; subsequently, a barcode information of the barcode display portion 1 of the canned juice is read. Since the barcode reading procedure could be performed instantaneously, the user could easily obtain the barcode information instantly.

Other than the swift barcode inputting procedure using the infrared reading portion 12, the information having the same content of the barcode could also be inputted by using the dialing key portion 13 of the cellular phone 11. For example, in a case where a user does not own a cellular phone with an infrared reading portion, the user first presses a button to differentiate between dialing keys for telephone use and then inputs the numbers indicated along the barcode; consequently, a code data having the same content as the code data read by the infrared reading portion 12 could be inputted.

As for step S12, after the read or key-entered barcode is temporarily stored in a memory of the cellular phone 11, the stored data is sent from the cellular phone 11 to the server 12 by pressing a prescribed transmitting button. The sending could be performed by using a dialing up function of a typical cellular phone 11, or by using various connecting means such as a WAN (Wide Area Network), a LAN (Local Area Network) or the Internet. Although this digital information input system could be made available for any user, the system could also perform a limited user service by requiring a password or a caller ID of the cellular phone 11. Although a dialing up connecting method would induce telephone costs, the cost could be paid by the user, or by the connected side, that is, a toll free number. In a case using the toll free number, a survey regarding an access count could be taken from the respective information providers 31 providing search article information so as to impose the charges in accordance with the access count.

The accessed server 21 searches for corresponding digital information based on the sent data. The search could be performed by a method such as a matching method of a database where a code matching to the sent data is first selected and then, the digital information corresponding to the selected code is searched. For example, the corresponding selected code could be promotion information regarding the canned juice 10 or manufacturer information regarding the canned juice 10, and further, job offering information or the URL regarding the manufacturer could be included. The URL selected as part of the digital information could not only be of a single URL but could be of plural URLs as well. The selected digital information could be instantaneously returned to the cellular phone 11 (step S13). Although it is desirable for the digital information to be sent in a coding such as HTML form, XML (eXtensible Markup Language) form, HDML (Handheld Device Markup Language) or WML (Wireless Markup Language), other files and data could be sent as well.

For example, in a case where the content of the read or key-entered barcode is a barcode regarding a radio program or a television program, information regarding the program could be obtained and various information regarding the programs such as the cast, the time of the program, the classification of the program and the supporter or provider of the program could be sent as digital information. As examples of the digital information, a BML (Broadcast Markup Language) or a B-XML could be sent.

The cellular phone 11 receives and utilizes the returned digital information from the server 21(step S14). Included in the utilization of digital information are functions such as displaying and storing the digital information returned from the server into files such as graphic file or text file; playing and saving the digital information into a sound file; or providing information on an electronic information web, e.g., the Internet by using a link of the digital information. The stored digital information could be used for purposes such as re-displaying the digital information from a temporary file such as a past record or the like and a stored data could be further forwarded to other electronic information terminal devices. The forwarding could be performed by using a wireless method, or by a connecting method of a typical personal computer such as the USB connection, the SCSI connection, or by using various recording mediums such as a disc, a card, a stick or a chip, or by a method using a facsimile, or by outputting with other electronic information terminal devices. The graphic form can be any of still images and moving images.

When graphic information such as information regarding the canned juice 10 is sent from the server 21 to the cellular phone 11, the information is displayed in a relatively small monitor. Information such as URL could be included in the information of the canned juice 10 so as to promote access to the Internet.

By using the digital information input system of this embodiment as explained above, the user could instantly obtain desired information by the input of the code information such as the barcode without having to punch in a URL or the like. The information provided to the user could be changed at the convenience of the information provider 31, so that renewal, correction, deletion or the like could be done freely. Since the information could be changed circumstantially, time limited information such as promotion information, present information and new product information or the like could be provided effectively, so that the user can use the information satisfactorily.

### [Second Embodiment]

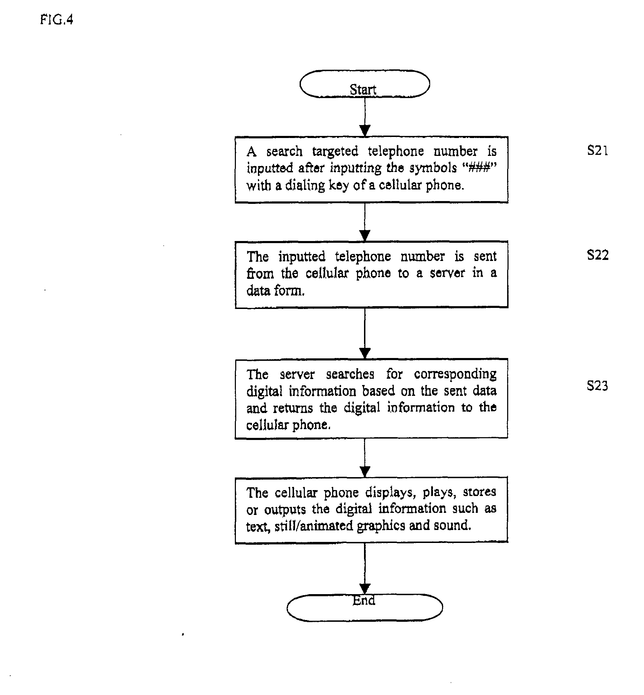

Same as the first embodiment, this embodiment also serves to provide digital information by sending digital information to a digital information terminal device from the server 21; however, as opposed to the first embodiment using code information, this embodiment uses a telephone number. The system of this embodiment uses the cellular phone 11 and the server 21 shown in FIG.1. The cellular phone 11 and the server 21 could be the same as those of the first embodiment; the cellular phone 11 could be loaded with or without the infrared reading portion 12. The server 21 responds particularly to data including a telephone number. Before the digital information is available to the user, the server 21 is already stocked with a prescribed database including information provided from numerous information providers 31. The information of the server 21 could be renewed, supplemented, altered, and deleted whenever necessary. The digital information returned from the server 21 to the cellular phone 11 could be set freely by the information provider 31 in a manner that the server 21 returns the digital information in accordance with the setting of the information provider 31. This embodiment shall be described hereinafter in compliance with a flow chart shown in FIG.4; it is to be noted that the explanations regarding the components similar to those explained in the first embodiment shall be omitted.

As shown in FIG.4, the user first obtains a search targeted telephone number from a product, a magazine, a newspaper, and a catalogue or by means such as a radio, a television or the Internet, or from a telephone directory or from a telephone operator. For example, in a case where the search targeted product is a canned juice, the telephone number listed on the canned juice is sought, and then in means to differentiate from a regular telephone calling procedure, the symbols "###" are inputted at the beginning by use of a dialing method, a key entering method or a method of the like. Although the symbols "###" are numbers assigned by a telephone company, a single dialing key could be assigned exclusively for searching information. Although the three time entries of the same key relatively simplifies the inputting procedure, the procedure of using the symbols "###" is only one example and a procedure such as regularly inputting an 8 or 9 digit number could be used as well. Following the dialing procedure or the key punching of the symbols "###", the sought telephone number could be inputted such as by operating with the dialing keys (step S21).

In step S22, following the inputting of the symbols "###", the data including a series of numbers constituted of a telephone number related to the search targeted information is temporarily stored in a memory of the cellular phone 11, and then, a prescribed transmitting button or buttons are pressed so as to send the stored data to the server 21 from the cellular phone 11. This transmission could be performed by using a dialing up function of a typical cellular phone 11, or by using various connecting means such as a WAN (Wide Area Network), a LAN (Local Area Network) or the Internet. Although this digital information input system could be made available for any user, the system could also be a limited user service by requiring a password or a caller ID of the cellular phone 11. Although a dialing up connecting method would induce telephone costs, the cost could be paid by the user, or by the connected side, that is, a toll free number. In a case using the toll free number, a survey regarding an access count could be taken from the respective information providers 31 providing search article information so as to impose the cost in accordance with the access count. The accessed server 21 searches digital information corresponding to data the sent to the server 21. The search could be performed by a method such as a matching method of a database where a code matching to the sent data comprising the telephone number is first selected and then, the digital information corresponding to the selected code is searched. The composition of this database is the same as that of the first embodiment in which a telephone number is used for search instead of using a barcode. The selected digital information is instantly sent to the cellular phone 11 (step S23).

In the same manner as the first embodiment, in step S24, the cellular phone 11 receives and utilizes the digital information returned from the server 21 and included in the utilization of digital information are functions such as displaying and storing the digital information returned from the server into files such as graphic file or text file; playing and saving the digital information into a sound file; or providing information on the Internet by using a link of the digital information.

In the same manner as the first embodiment, by using the digital information input system of this embodiment, the user could instantly obtain desired information by the input of a telephone number without having to punch in a URL or the like. The information provided to the user could be changed at the convenience of the information provider 31 so that renewal, correction, deletion or the like could be done freely; and since the information could be changed circumstantially, time limited information such as promotion information, present information and new product information or the like could be provided effectively.

### [Third Embodiment]

A digital information input system of this embodiment applies digital information to an article or the like by using a readable transparent ink in which the transparent ink is read by a transparent ink readable reading device loaded or connected to a portable information terminal device for reading digital information in a form of the transparent ink so as to obtain information regarding the article or the like.

A readable transparent ink is used for the digital information input system of this embodiment. An infrared absorbing ink or an ion ink could be given as examples for the transparent ink. The transparent ink could be printed over a surface of a printed wrapper of any given product and further, owing to the transparent nature of the ink, the appearance of the printed over wrapper would not be affected. Therefore, information could freely be applied without rendering appearance inferior and could be handled with ease.

An ink comprised of a phosphoric white crystal powder containing a 30 to 70 weight percentage of *Fe* ion or *Cu* ion, or an ink comprised of a phosphoric white crystal powder comprising a 40 to 70 weight percentage of *P*_{*2*}*O*_{*5*} could be given as examples for the infrared absorbing ink. A base material capable of reflecting 80 percent or more infrared rays could be used as a portion for applying the ink; the ink could be printed onto the portion using a code form such as a barcode so that the code could be read by a semiconductor laser or the like. In a case where such an infrared absorbing ink is printed in a barcode form, the printed portion could be read by an infrared reading portion of a cellular phone and could be practiced to the digital information input system of the first embodiment. The ion ink is an ink including an ion electrolyte in which a code applied to the ion ink is read by scanning a reader having an anode and a cathode. At a portion contacting to the ion electrolyte, an electric potential difference is created; on the other hand, at a portion where there is no ion electrolyte, a potential difference is not created. Thus composed, information (zero and one) could become read. The foregoing ion ink is already being sold in the market such as the IOMEC (pronounced "i-o-mec", name of product, manufactured by Alec Japan K.K.).

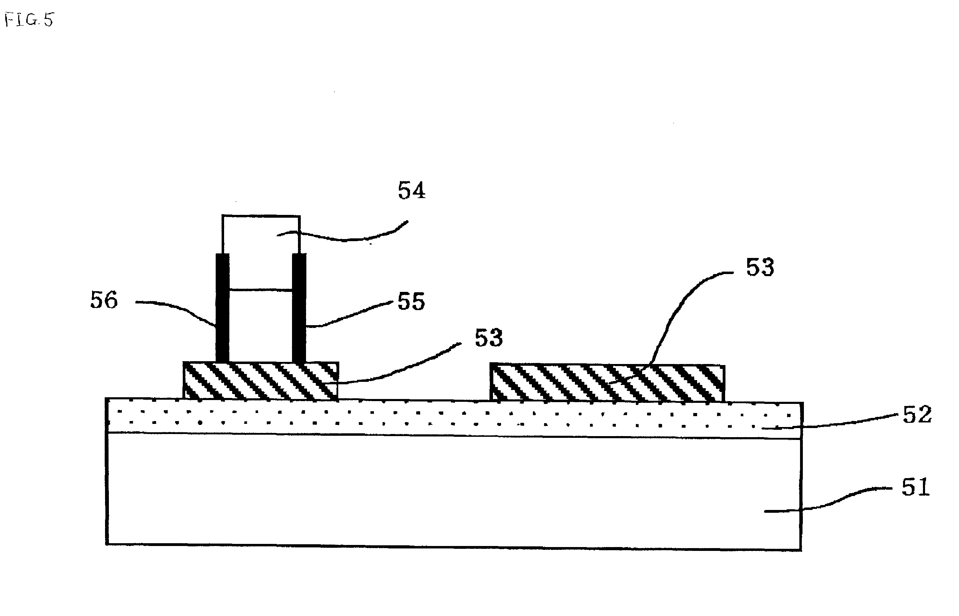

FIG.5 is a view showing a reading and scanning state by using an ion ink in which a reader 54 has an anode 55 and a cathode 56 oppositely arranged from a printing surface. A paper or a base film for printing means could be given as examples for a base material 51 in which a printing layer 52 is formed on top of the base material 51, and further, an ion ink layer 53 printed to form a code of a prescribed pattern on a top portion of the printing layer 52. Since the ion ink layer 53 is transparent, the appearance of the printed layer 52 arranged below would not be affected. When the anode 55 and the cathode 56 are both faced toward the ion ink layer 53, the electrolyte of the ion ink layer 53 creates an electric potential difference between the anode 55 and the cathode 56. When the anode 55 and the cathode *56* are not faced toward the ion ink layer 53, an electric potential difference is not created. Owing to the difference regarding the foregoing electric potential difference, zero and one information could be retrieved in accordance with a printing pattern of the ion ink layer 53. The reader 54 could be for example, loaded to an electronic information terminal device or could be connected and attached externally. As examples of the electronic information terminal device, a cellular phone, a notebook type personal computer, or a PDA (Personal Digital Assistant, portable information terminal device) are included; and in a case where an aspect of portability is not omitted, a desktop type personal computer, and an Internet applicable television, an Internet applicable game machine, an Internet applicable electric household appliance, and also a car navigation device are included as an electronic information terminal device.

Various printing methods could be used for the printing method with the ion ink or with the infrared absorbing ink. Photogravure printing, offset printing, screen-printing, inkjet printing, electrophotographic printing, transcription printing could be given as examples for the printing methods. JAN code for indicating uniformity of a product, NM-7 used for services such as package delivery, or IFT code, Code 128, PDF 417 (Symbol Inc. U.S.A), Code 39 are examples of the types of codes used for a single dimensional code, and QR Code model 2 (Nihon Denso), MaxiCode, VeriCode (Vertec Inc.), Carula Code (Alec Japan K.K.), DaTa Code (ID Matrix), Cybercode (Sony Corp.), Intacta Code are examples of the type of codes used for a two dimensional code; nevertheless, the types of codes is not to be limited to the aforementioned codes. Although the transparent ink has a benefit of not affecting the appearance of a printed wrapper, the transparent ink may cause the printed portion to be unrecognizable. Therefore, an indicator for pointing out the portion of the transparent ink could be arranged so that the vicinity of the portion could be scanned for reading the code of the transparent ink. The digital information subject for coding could be of various kinds and is not to be limited to text form. The digital information could be various data such as text, still/animated graphics, sound, or could be combinations thereof; sound could be obtained when reproduced for purposes such as a birthday card by recording a sound data with the transparent ink.

The transparent ink could be applied in an extremely wide range, and the present day procedure of keypunching electronic data could all be altered to the procedure of scanning the transparent ink. The transparent ink could be used for name cards, address registration and recording, products and catalogues of information providers desiring access to their homepage, television program listings, and for other limitless purposes.

By using a digital information input system of this invention, a user could instantly obtain desired information by inputting a code information such as a barcode, a telephone number without having to punch in a URL or the like. The information provided to the user could be changed at the convenience of an information provider 31 so that renewal, correction, deletion or the like could be done freely; and since the information could be changed circumstantially, time limited information such as promotion information, present information and new product information or the like could be provided effectively.

By using a digital information input system of this invention with a transparent ink, necessary information could be applied to a wrapper of a product or printed matter or the like without having to affect the appearance of the wrapper of a product or printed matter or the like and further, electronic data could easily be inputted in a short amount of time.

The foregoing description of a preferred embodiment of the invention has been presented for purposes of illustration and description, and is not intended to be exhaustive or to limit the invention to the precise form disclosed. The description was selected to best explain the principles of the invention and their practical application to enable others skilled in the art to best utilize the invention in various embodiments and various modifications as are suited to the particular use contemplated. It is intended that the scope of the invention not be limited by the specification, but be defined by the claims set forth below.

## Claims

1. A digital information input system comprising:
an electronic information terminal device for inputting code information regarding a search targeted article or the like and for sending data including the code information; and
a server for returning, to the digital information terminal device, digital information corresponding to the code information based on the data transmitted from the electronic information terminal device,
wherein the electronic information terminal device sends the data including the code information regarding the search targeted article or the like and allows use of the digital information transmitted from the server after the code information regarding the search targeted article and the like is inputted.

2. The digital information input system according to claim 1, wherein the electronic information terminal device has an infrared reading portion and serves a portable information terminal device for inputting and reading the code information via the infrared reading portion.

3. A digital information input system comprising:
an electronic information terminal device capable of sending data including a search targeted phone number; and
a server for returning, to the digital information terminal device, a digital information corresponding to the search targeted phone number included in the data transmitted from the electronic information terminal device,
wherein the electronic information terminal device sends the data including the phone number regarding the search targeted article or the like and enables use of the digital information sent from the server.

4. The digital information input system according to claim 3, wherein the electronic information terminal device is a portable information terminal device capable of entering dial numbers.

5. The digital information input system according to claim 1 or 3, wherein the electronic information terminal device has at least one of the following functions which are:
displaying and saving the digital information returned from the server as a file such as an image file or a text file;
playing and saving the digital information as a file such as a sound file; or
providing information on an electronic information web by using a link of the digital information.

6. The digital information input system according to claim 1 or 3, wherein the digital information includes URL.

7. A digital information input system applying digital information to an article or the like by using a readable transparent ink,
wherein the transparent ink is read by a transparent ink readable reading device loaded or connected to an electronic information terminal device for reading digital information in a form of the transparent ink so as to obtain information regarding the article or the like.

8. The digital information input system according to claim 7, wherein the transparent ink is an ion ink or an infrared absorbing ink.
